# EUROPÄISCHE PATENTSCHRIFT

(11) **EP 4 186 726 B1**
(45) Veröffentlichungstag und Bekanntmachung des Hinweises auf die Patenterteilung: **12.06.2024**
(21) Anmeldenummer: 22205350.6
(22) Anmeldetag: 03.11.2022
(51) Int. Cl.: B60J 7/00, B60J 7/12

(54) **VERFAHREN ZUR HERSTELLUNG EINES VERDECKBEZUGS EINES FALTVERDECKS FÜR EIN CABRIOLET-FAHRZEUG SOWIE FALTVERDECK FÜR EIN CABRIOLET-FAHRZEUG**
METHOD FOR PRODUCING A COVER FOR A FOLDING TOP FOR A CONVERTIBLE VEHICLE AND FOLDING COVER FOR A CONVERTIBLE VEHICLE
PROCÉDÉ DE FABRICATION D'UN REVÊTEMENT DE CAPOTE PLIANTE POUR UN VÉHICULE CABRIOLET ET CAPOTE PLIANTE POUR UN VÉHICULE CABRIOLET

(30) Priorität: 24.11.2021 DE 102021213223
(43) Veröffentlichungstag der Anmeldung: 31.05.2023
(73) Patentinhaber: Magna Car Top Systems GmbH, 74321 Bietigheim-Bissingen (DE)
(72) Erfinder: HOTZY, Stefan, 71263 Weil der Stadt (DE)
(74) Vertreter: Reuter, Silke Beatrix

(56) Entgegenhaltungen:
- EP-A2- 1 103 402
- DE-U1- 29 819 187
- JP-A- 2005 349 930
- US-B1- 6 189 950

## Beschreibung

Die Erfindung betrifft ein Verfahren zur Herstellung eines Verdeckbezugs eines Faltverdeck für ein Cabriolet-Fahrzeug sowie Faltverdeck für ein Cabriolet-Fahrzeug.

### Stand der Technik

Moderne Cabriolet-Fahrzeuge mit einem Faltverdeck und flexiblem Verdeckbezug müssen hohe Ansprüche an Ganzjahrestauglichkeit, Geräusch- und Temperaturisolation sowie an ein optisches Erscheinungsbild erfüllen. Um diesen Anforderungen zu genügen sind derartige Faltverdecke mehrlagig aufgebaut und umfassen einen äußeren Verdeckbezug, in der Regel eine mittlere Polster- oder auch Dämmmatte und einen zum Innenraum weisenden Innenhimmel. Dabei gewährleistet die Polster- und Dämmmatte nicht nur eine akustische sowie thermische Isolation sondern unterstützt auch eine schöne Formgebung des Faltverdecks.

Soweit eine Polstermatte vorgesehen ist, ist diese als separate Lage ausgeführt und partiell an dem äußeren Verdeckbezugstoff befestigt. Hierdurch wird in der Schließstellung des Faltverdecks eine ausreichende Anlage der Polstermatte am Verdeckbezugstoff erreicht. In der Schließstellung werden der Verdeckbezugstoff sowie die Polstermatte von den Verdeckbauteilen getragen und überspannt den Fahrgastraum. Das verstellbare Faltverdeck erstreckt sich ausgehend von einem auf der Vorderseite angeordneten nicht dargestellten Windschutzscheibenrahmen, der sogenannten A-Säule in einen Heckbereich des Fahrzeugs. Bei einem einem Viersitzer ist dies die C-Säule. Das Faltverdeck ist bezogen auf eine Mittelachse symmetrisch aufgebaut.

Die Randbereiche des Verdeckbezugs sind in der Regel mit einem Einfassband eingefasst, wobei in den Seitenbereichen des Verdeckbezugs mittels des Einfassbandes auch ein eine Regenrinne bildender Keder mit an den Verdeckbezug angenäht wird. Hierdurch wird sowohl eine Verstärkung des Randbereichs als auch eine Wasserführung erreicht. Nachteilig bei dieser Ausgestaltung der Seitenbereiche mittels des Einfassbandes mit aufgenähter Regenrinne ist die hierfür erforderliche sichtbare Naht auf der Sichtseite des Verdeckbezugstoffes. Diese sichtbare Naht erscheint bei Abweichungen beim Nähvorgang am fertiggestellten Faltverdeck als optisch nicht ansprechend. Des Weiteren verblasst der Nähfaden mit der Lebensdauer und dem Einfluss von Witterungsbedingungen, was ebenfalls als optisch störend empfunden wird.

Aus der EP 1 103 402 A2 ist ein mit dem Rand eines Stoffverdecks verbundenes Einfassband, das eine in Längsrichtung verlaufende Rinne bildet, bekannt.

Es ist Aufgabe der Erfindung ein Verfahren zur Herstellung eines Verdeckbezugs eines Faltverdecks für ein Cabriolet-Fahrzeug derart weiterzubilden, dass der mit dem Verfahren hergestellte Verdeckbezug hohen Qualitätsanforderungen genügt und gleichzeitig ein hochwertiges, optisch ansprechendes Erscheinungsbild hat.

Diese Aufgabe wird unter einem ersten Aspekt durch die im Patentanspruch 1 angegebenen Merkmale gelöst.

Das erfindungsgemäße Faltverdeck basiert im Wesentlichen auf einer Anordnung eines streifenförmigen Einfassbandes und einem gummielastischen oder flexiblen streifenförmigen Profil an einer unteren Randkante des Verdeckbezugs, wobei das Einfassband das Profil taschenförmig umschließt und über eine von der Außenseite her gesehen nicht sichtbare erste und zweite Naht am Verdeckbezug festgelegt ist.

Das erfindungsgemäße Herstellverfahren zur Herstellung des Verdeckbezugs mit seitlichem Randbereich RS umfasst dabei die folgenden Schritte:
- Bereitstellen eines Verdeckbezugs mit einer Außenseite und einer Innenseite und mit einem Randbereich und einer Randkante
- Bereitstellen eines Einfassbandes, welches streifenförmig ausgeführt und einen ersten und einen zweiten Endbereich umfasst
- Bereitstellen eines gummielastischen oder flexiblen, streifenförmigen Profils
- Anlegen des Einfassbandes mittels seines ersten Endbereichs an die Randkante des Verdeckbezugs, wobei ein erster streifenförmiger Bereich des Einfassbandes in z- Richtung nach oben verlaufend unmittelbar auf der Außenseite anliegt
- Festlegen des Einfassbandes mittels einer ersten Naht am Verdeckbezug in einer Höhe H1 ausgehend von der Randkante
- Fixieren des Profils auf dem ersten streifenförmigen Bereich des Einfassbandes, wobei das Profil ausgehend von der Randkante in z-Richtung nach oben verläuft und eine Höhe H0 ausgehend von der Randkante aufweist, wobei die Höhe H0 derart bemessen ist, dass das Profil die erste Naht in der Höhe H1 überdeckt
- Umbugen des Einfassbandes derart, dass das Einfassband nach außen um das Profil einfach umgeschlagen wird und im Bereich der Randkante diese umschließt und auf der Innenseite des Verdeckbezugs in z-Richtung nach oben geführt wird
- Festlegen des Einfassbandes im Bereich seines zweiten Endbereichs mittels einer zweiten Naht in einer Höhe an dem Verdeckbezug, wobei die zweite Naht derart eingebracht wird, dass ausschließlich der Verdeckbezug und der zweite Endbereich des Einfassbandes beim Nähvorgang vernäht werden.

Durch das erfindungsgemäße Verfahren kann ein Verdeckbezug eines Faltverdecks für ein Cabriolet-Fahrzeug derart hergestellt werden, dass dieser ein verbessertes optisches Erscheinungsbild durch keine sichtbaren Nähte auf der Sichtseite des Verdeckbezugs hat.

Es kann eine Regenrinne hergestellt werden, die sich der Faltbewegung des Faltverdecks bei einer Verstellbewegung zwischen der Offen und Schließstellung einfach anpasst und ein sicheres Wassermanagment im seitlichen Randbereich des Faltverdecks gewährleistet. Die Regenrinne wird dabei erfindungsgemäß durch ein elastisches streifenförmiges Einlegeteil realisiert.

Vorteilhafterweise ist das streifenförmige, elastische Einlegeteil aus einem Kunststoff wie Ethylen-Propylen-Dien-Kautschuk (EPDM) hergestellt. Durch die Verwendung dieses Werkstoffes, kann der Randbereich mit einer wulstartigen in Fahrzeuglängsrichtung verlaufenden Ausprägung hergestellt werden, wobei der Randbereich flexibel ist und sich beim Öffnen und Schließen des Faltverdecks entsprechend anpasst und sich mit dem Verdeckbezug in der Offenstellung des Faltverdecks einfach in Falten legen lässt.

Weiterbildungen der Erfindung sind in den abhängigen Ansprüchen, der Beschreibung sowie den Zeichnungen angegeben.

Die x, y, z- Richtung entspricht den Richtungen eines üblichen Fahrzeugkoordinatensystems, bei dem x die Fahrzeuglängsrichtung, y die Querrichtung und z die Hochrichtung bezeichnet.

### Beschreibung der Erfindung

Die Erfindung wird nachfolgend beispielhaft unter Bezugnahme auf die beigefügten Zeichnungen beschrieben.

Es zeigen:
- Fig. 1: eine Seitenansicht auf ein Faltverdeck bei geschlossenem Verdeck (Schließstellung),
- Fig. 2: einen Querschnitt durch einen seitlichen Randabschnitt des Faltverdecks nach dem Stand der Technik,
- Fig. 3: einen Querschnitt durch einen seitlichen Randabschnitt des Faltverdecks gemäß der vorliegenden Erfindung,
- Fig. 4: eine schematische Darstellung der Herstellung des Faltverdecks im seitlichen Randabschnitt in einem ersten Verfahrensschritt,
- Fig. 5: eine schematische Darstellung der Herstellung des Faltverdecks im seitlichen Randabschnitt in einem zweiten Verfahrensschritt; und
- Fig. 6: eine schematische Darstellung der Herstellung des Faltverdecks im seitlichen Randabschnitt in einem anschließenden weiteren Verfahrensschritt.

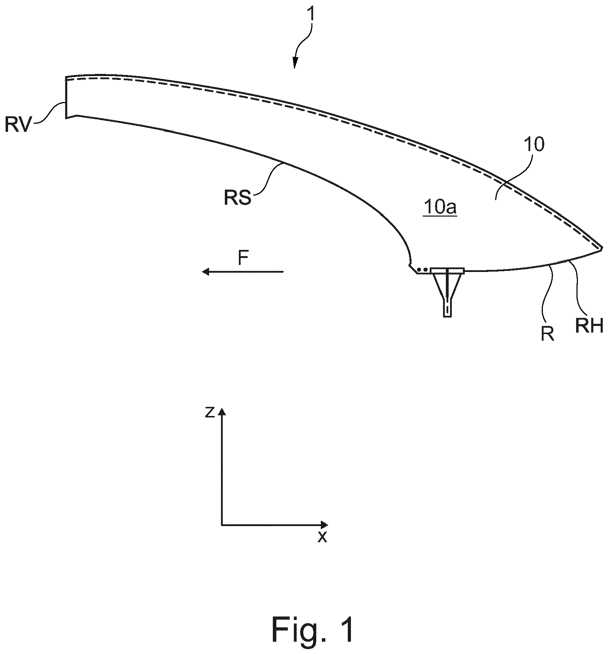

In Fig. 1 ist exemplarisch ein Faltverdeck 1 für ein offenes Kraftfahrzeug, ein Cabriolet, dargestellt. Das Cabriolet weist eine Karosserie auf, die in der Darstellung nicht gezeigt wird, auf die oberhalb einer Gürtellinie ein Faltverdeck 1 aufgesetzt ist, dass aus einem einen Fahrgastraum überspannenden Schließstellung in eine nicht gezeigte zusammen gefaltete Ablagestellung/Offenstellung in einen heckseitigen Verdeckkasten bewegt werden kann. Das Faltverdeck weist dabei einen Verdeckbezug 10 aus einem Verdeckbezugstoff auf der sich über einem Verdeckgestänge oder Spriegeln, die in der Zeichnung ebenfalls nicht dargestellt sind, spannt und. Der Verdeckbezug 10 enthält einen Ausschnitt, der zur Aufnahme einer Heckscheibe dient. Der Verdeckbezug 10 hat eine zur Sichtseite weisende Außenseite 10a und eine zum Fahrgastraum weisende Innenseite 10b und ist üblicherweise mehrlagig aus einer Außenlage und einer Innenlage ausgeführt. Dies ist dem Fachmann allgemein bekannt und wird an dieser Stelle nicht näher beschrieben.

Der Verdeckbezug 10 ist besitzt einen umlaufenden Rand R, der an dem Fahrzeug dichtend anliegen muss. Hierbei liegt entweder der Rand R des Verdeckbezugs 10 über Dichtelemente oder ein an dem Verdeckbezug 10 angebundenes Verdeckbauteil über ein Dichtelement an einem Karosseriebauteil an.

Der Verdeckbezug 10 ist zumindest im vorderen Randbereich RV an der Dachkappe im Bereich der A-Säule angebunden. Über seinen hinteren Randbereich RH ist der Verdeckbezug 10 beispielsweise in geeigneter Weise mit einem Spannbügel verbunden und wird durch den Spannbügel in der Schließposition gespannt. Zwischen dem vorderen Randbereich RV und dem hinteren Randbereich RH erstrecken sich beidseits seitliche Randbereiche RS, die mit einem in Fahrzeuglängsrichtung (x-Richtung) verlaufenden, regenrinnenartigen Vorsprung P ausgeführt sind.

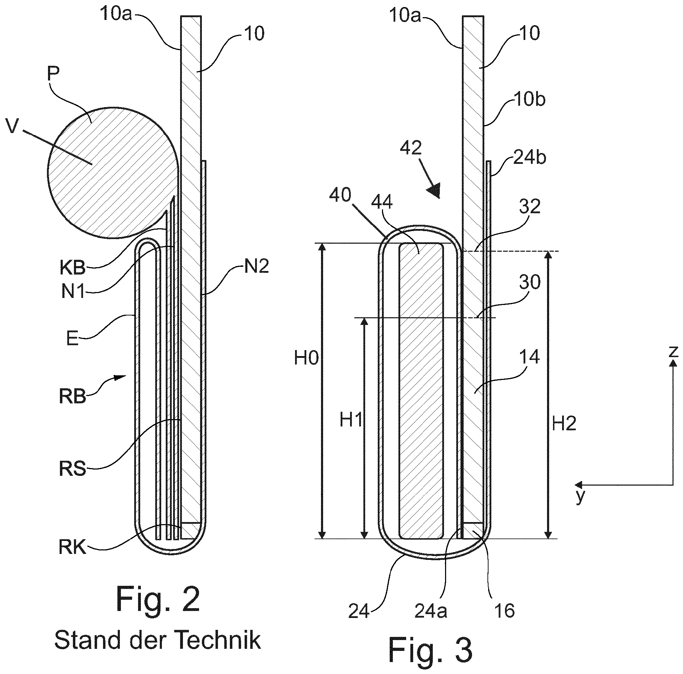

Diese übliche Ausführung des Randbesatzes RB ist dem Fachmann beispielsweise aus der DE 41 12 256 A1 bekannt und in einer schematischen Darstellung in der Figur 2 in einer Schnittdarstellung gezeigt. Hierbei werden die seitlichen Randbereiche RS des Verdeckbezugs 10 bzw. die entsprechenden nach unten weisenden Randkanten RK von einem Einfassband E umschlossen, welches durch Nähen mittels einer -von der Außenseite 10a her gesehen- sichtbaren Naht N1 festgelegt ist. Der auf der Außenseite 10a des Verdeckbezugs 10 verlaufende streifenförmige Teil des Einfassbandes E ist dabei einfach umgeschlagen und um die Randkante RK nach hinten auf die Innenseite 10b des Verdeckbezugs 10 geführt. Ferner liegt zwischen dem auf der Außenseite 10a liegenden streifenförmigen Teil des Einfassbandes E und der zugewandten Außenseite 10a des Verdeckbezugs 10 ein schnurförmiger Profilstrang P (Kederschnur) der von einer streifenförmigen Schlaufe eines Kederbandes KB umschlungen ist. Die Schlaufe des Kederbandes KB ist ebenfalls mit dem Rand des Verdeckbezugs 10 über eine Naht N2 vernäht. Durch diesen vom Verdeckbezug 10 in z-Richtung nach außen abstehenden schnurförmigen Profilstrang P ist ein regenrinnenartiger in Fahrzeuglängsrichtung (x-Richtung) verlaufender Vorsprung V gebildet.

Figur 3 zeigt die mittels des erfindungsgemäßen Verfahrens hergestellte Ausführung des seitlichen Randbereichs RS/14 des Verdeckbezugs 10 in einer Schnittansicht. Wie bereits beschrieben verläuft dieser seitliche Randbereich 14 jeweils beidseits des Verdeckbezugs 10 ausgehend von dem vorderen Randbereich RV im Bereich der A-Säule bis zu der C-Säule bei einem Viersitzer Cabriolet. Nachfolgend wird nur ein seitlicher Randbereich 14 beschrieben, da der Aufbau des Verdeckbezugs 10 bezogen auf eine in x-Richtung verlaufende Mittelachse spiegelsymmetrisch aufgebaut ist. Die Figur zeigt dabei einen Ausschnitt eines unteren in Längsrichtung verlaufenden Randbereich 14 und eine in z-Richtung nach unten weisende Randkante 16 des Verdeckbezugs 10.

Der im Querschnitt dargestellte Ausschnitt des seitlichen Randbereichs 14 des Verdeckbezugs 10 ist mit einem in Längsrichtung verlaufenden Vorsprung 40 ausgeführt, der eine Rinne 42 zum Wasserablauf in Längsrichtung ausbildet.

Der Vorsprung 40 wird durch ein streifenförmig am Randbereich 14 verlaufendes weichelastisches Profil 44 gebildet, welches im Querschnitt rechteckig ausgebildet ist und von einem Einfassband 24, wie nachfolgend beschrieben, umschlossen, abgedeckt gehalten wird. Das weichelastische Profil 44 besitzt eine Höhe H0 und ist vorzugsweise aus einem elastischen Kunststoff wie einem Ethylen-Propylen-Dien-Kautschuk (EPDM) ausgeführt. Das Profil 44 schließt mit seiner in Hochrichtung nach unten weisenden Unterkant im Wesentlichen bündig mit der Randkante 16 ab.

Das Einfassband 24 umfasst einen ersten Endbereich 24a und einen zweiten Endbereich 24b und ist aus einem textilen Material oder einem Kunststoffmaterial.

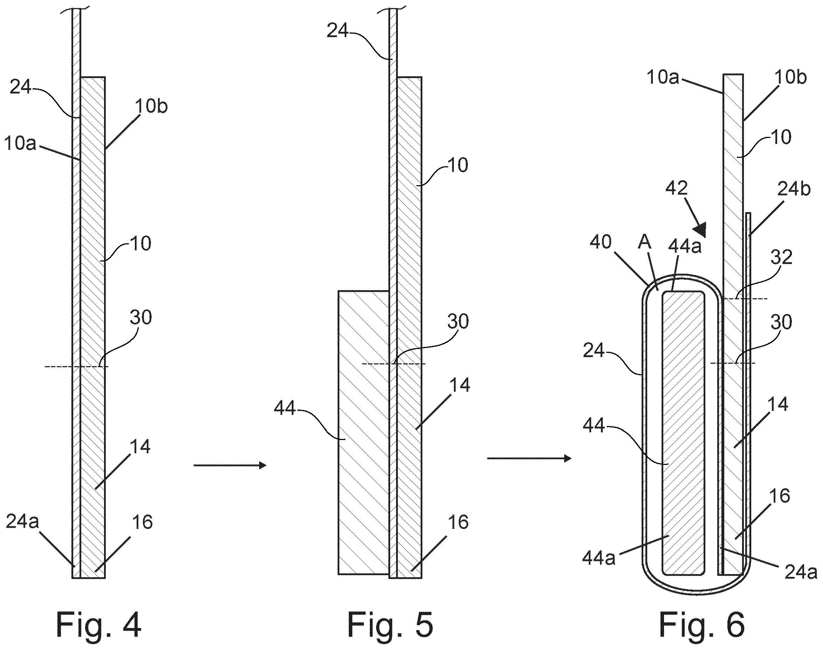

Wie es aus der Zeichnung der Figur 3 bzw. 6 zu erkennen ist, liegt ein streifenförmiger Teil des Einfassbandes 24 unmittelbar auf der Außenseite 10a des Verdeckbezugs 10 an, wobei sich das Einfassband 24 mittels seines ersten Endbereichs 24a ausgehend von der Randkante 16 des Verdeckbezugs 10 in z- Richtung nach oben erstreckt und in einem Abstand H1 ausgehend von der Randkante 16 mittels einer ersten Naht 30 festgelegt ist. Dies erste Naht 30 verläuft in Längsrichtung parallel zur Randkante 16 und ist nur schematisch angezeigt. Ausgehend von der ersten Naht 30 verläuft das Einfassband weiter auf der Außenseite 10a nach oben und ist dann im weiteren Verlauf nach außen hin umgeschlagen und verläuft in z- Richtung nach unten und umschließt dabei sowohl das weichelastische Profil 44 vollständig als auch die Randkante 16 des Verdeckbezugs 10. Wie es aus den Zeichnungen zu erkennen ist, bildet das Einfassband 24 einen tunnelförmigen Aufnahmeraum A für das Profil 44, welches vollständig ummantelt ist. Das Einfassband 24 ist ausgehend von der Außenseite um die Randkante 16 auf die Innenseite 10b in z- Richtung nach oben geführt und dort in einem Abstand H2 mittels einer zweiten Naht 32 an seinem zweiten Endbereich 24b festgelegt. Diese zweite Naht 32 ist ebenfalls als Längsnaht parallel zur Randkante 16 ausgebildet und von der Außenseite gesehen verdeckt angeordnet. Die zweite Naht 32 ist derart gefertigt, dass die Stiche ausschließlich den zweiten Endbereich 24b und den Verdeckbezug 10 durchdringen und in der Höhe H2 ausgeführt sind. Das Profil 44 ist in seiner Höhe H0 derart ausgeführt und angeordnet, dass es die Naht 32 in der Höhe H2 von der Sichtseite her verdeckt und die Naht 32 im Bereich der Rinne 42 eingebracht ist.

Bei dem Verfahren zur Herstellung des Verdeckbezugs 10 mit seitlichem Randbereich 14 sind folgende Schritte vorgesehen:
Zunächst wird ein Verdeckbezugs 10, der eine Außenseite 10a, eine Innenseite 10b und einen Randbereich 14 mit einer Randkante 16 aufweist bereitgestellt. Des Weiteren wird ein Einfassband 24 bereitgestellt, welches streifenförmig ausgeführt ist und einen ersten und einen zweiten Endbereich 24a, 24b umfasst. Das Einfassband 24 ist vorzugsweise aus einem textilen Material oder einem Kunststoff. Weiterhin wird für das Herstellverfahren ein gummielastischen oder flexiblen, streifenförmigen Profil benötigt. Dieses ist beispielsweise aus einem elastischen Kunststoff z.B. einem EPDM oder einem Moosgummi.

In einem ersten Verfahrensschritt, der in der Figur 4 dargestellt ist, wird das Einfassband 24 mittels seines ersten Endbereichs 24a bündig an die Randkante 16 des Verdeckbezugs angelegt, wobei ein erster streifenförmiger Bereich des Einfassbandes 24 in z- Richtung nach oben verlaufend unmittelbar auf der Außenseite 10a anliegt. Eine Fixierung des Einfassbandes 24 wird dann mittels einer ersten Naht 30 am Verdeckbezug 10 in einer Höhe H1 erreicht. Die Höhe H1 bemisst sich ausgehend von der Randkante 16 des Verdeckbezugs 10, wie es in der Figur 3 bemaßt ist.

Nachdem das Einfassband auf der Außenseite des Verdeckbezugs 10 fixiert angeordnet ist, wird in einem in der Figur 5 dargestellten nachfolgenden Verfahrensschritt das Profil 44 auf dem ersten streifenförmigen Bereich festgelegt. Hierbei verläuft das Profil 44 ausgehend von der Randkante 16 in z-Richtung nach oben und weist eine Höhe H0 auf. Die Höhe H0 ist derart bemessen, dass das Profil 44 die erste Naht 30 überdeckt. Das Fixieren des Profils 44 erfolgt beispielsweise mittels eines Klebebandes, welches auf das Profil 44 oder den ersten streifenförmigen Bereich 44 appliziert wird. In einer alternativen Variante kann auch unmittelbar auf das Profil 44 oder den streifenförmigen Bereich des Einfassbandes 24 ein Klebstoff appliziert werden.

Nach dem Festlegen des Profils 44 wird der derart vorkonfektionierte Randbereich 14 in eine Umbugvorrichtung eingelegt. Es erfolgt dann ein Umbugen des Einfassbandes 24 derart, dass das Einfassband nach außen um das Profil 44 einfach umgeschlagen wird und im Bereich der Randkante 16 diese umschließt und auf der Innenseite 10b des Verdeckbezugs 10 in z-Richtung nach oben geführt wird. Dies ist in der umgebugten Situation in der Figur 6 dargestellt.

Abschließend wird nun das Einfassband 24 im Bereich seines zweiten Endbereichs 24b an dem Verdeckbezug 10 festgelegt. Dies erfolgt mittels einer zweiten Naht 32 in einer Höhe H2 an dem Verdeckbezug 10, wobei die zweite Naht 32 derart eingebracht wird, dass ausschließlich der Verdeckbezug 10 und der zweite Endbereich 24b des Einfassbandes mittels Stichen beim Nähvorgang vernäht werden. Die Naht in der Höhe H2 ist dabei derart angeordnet, dass das mit dem Einfassband 24 ummantelte Profil 44 die zweite Naht 32 überdeckt. Wie es aus der Darstellung der Figuren 3 und 6 zu erkennen ist, liegt die zweite Naht 32 in z- Richtung gesehen über der ersten Naht 30.

Diese Anordnung der zweiten Naht 32 wird beispielsweise derart erreicht, dass vor dem Nähvorgang und Herstellen der zweiten Naht 32 das nach oben weisende Ende 44a des mit dem Einfassband 24 umschlossenen Profils 44 in z-Richtung nach unten gedrückt wird, so dass die Außenseite 10a im Bereich der Höhe H2 für den Nähvorgang freiliegend ist. Nach dem Nähvorgang dehnt sich das flexible Profil 44 wieder in die entgegengesetzte Richtung nach oben aus und die zweite Naht 32 ist mittels des eingefassten Profils 44 verdeckt. In diesem Bereich zwischen Profil 44 und Verdeckbezug 10 bildet sich dabei eine in Längsrichtung verlaufende Rinne 42 die dem Wassermanagment dient.

### Bezugszeichenliste

- 1: Faltverdeck
- 10: Verdeckbezug
- 10a: Außenseite
- 10b: Innenseite
- 14: Randbereich
- 16: Randkante
- 24: Einfassband
- 24a: erster Endbereich
- 24b: zweiter Endbereich
- 30: erste Naht
- 32: zweite Naht
- 40: Vorsprung
- 42: Rinne
- 44: Profil
- 44a: nach oben weisendes Ende des Profils
- R: Rand
- RV: vorderer Randbereich
- RH: hinterer Randbereich
- RS: seitlicher Randbereich

## Patentansprüche

1. Verfahren zur Herstellung eines Verdeckbezugs (10) eines Faltverdeck (1) für ein Cabriolet-Fahrzeug, wobei der Verdeckbezug (10) eine Außenseite (10a) und eine Innenseite (10b) umfasst und weiterhin zumindest einen seitlichen Randbereiche (14) mit einer Randkante (16) aufweist, wobei der seitliche Randbereich (14) im Bereich der Randkante (16) mit einem zur Außenseite (10a) weisenden Vorsprung (V), welcher eine in Längsrichtung verlaufende Rinne (42) bildet, ausgeführt ist, mit den Schritten:
a. Bereitstellen eines Verdeckbezugs (10) mit einer Außenseite (10a) und einer Innenseite (10b) und mit einem Randbereich (14) und einer Randkante (16)
b. Bereitstellen eines Einfassbandes (24), welches streifenförmig ausgeführt und einen ersten und einen zweiten Endbereich (24a, 24b) umfasst
c. Bereitstellen eines gummielastischen oder flexiblen, streifenförmigen Profils (44)
d. Anlegen des Einfassbandes (24) mittels seines ersten Endbereichs (24a) an die Randkante (16) des Verdeckbezugs (10), wobei das Einfassbandes (24) in z-Richtung nach oben verlaufend unmittelbar auf der Außenseite (10a) anliegt und der zweite Endbereich (24b) nach oben weisend ausgerichtet ist
e. Festlegen des Einfassbandes (24) mittels einer ersten Naht (30) am Verdeckbezug (10) in einer Höhe H1 ausgehend von der Randkante (16)
f. Fixieren des Profils (44) auf dem Einfassband (24), wobei das Profil (44) ausgehend von der Randkante (16) in z-Richtung nach oben verläuft und eine Höhe H0 ausgehend von der Randkante (16) aufweist, wobei die Höhe H0 derart bemessen ist, dass das Profil (44) die erste Naht (30) in der Höhe H1 überdeckt
g. Umschlagen des Einfassbandes (24) derart, dass das Einfassband (24) nach außen um eine in z-Richtung nach oben weisende Ende (44a) des Profils (44) einfach umgeschlagen wird, in z- Richtung auf einer Außenseite nach unten geführt wird und im weiteren Verlauf den Bereich der Randkante (16) umschließt und auf der Innenseite (10b) des Verdeckbezugs (10) in z-Richtung nach oben geführt wird
h. Festlegen des Einfassbandes (24) im Bereich seines zweiten Endbereichs (24b) mittels einer zweiten Naht (32) in einer Höhe H2 an dem Verdeckbezug (10), wobei die zweite Naht (32) derart eingebracht wird, dass ausschließlich der Verdeckbezug (10) und der zweite Endbereich (24b) des Einfassbandes (24) beim Nähvorgang vernäht werden und die zweite Naht (32) mittels des eingefassten Profils (44) verdeckt angeordnet ist.

2. Verfahren zur Herstellung eines Verdeckbezugs (10) nach Anspruch 1, **dadurch gekennzeichnet, dass** das Fixieren des Profils (44) in Schritt f mittels eines Klebebandes erfolgt, welches auf das Profil (44) oder den ersten streifenförmigen Bereich des Einfassbandes (24) appliziert wird.

3. Verfahren zur Herstellung eines Verdeckbezugs (10) nach Anspruch 1, **dadurch gekennzeichnet, dass** das Fixieren des Profils (44) in Schritt f durch ein unmittelbares Verkleben erfolgt, wobei ein Klebstoff auf das Profil (44) oder den streifenförmigen Bereich des Einfassbandes (24) appliziert wird.

4. Verfahren zur Herstellung eines Verdeckbezugs (10) nach einem der vorangehenden Ansprüche, **dadurch gekennzeichnet, dass** das Umschlagen des Einfassbandes (24) in Schritt g in einer Umbugvorrichtung erfolgt.

5. Verfahren zur Herstellung eines Verdeckbezugs (10) nach einem der vorangehenden Ansprüche, **dadurch gekennzeichnet, dass** die zweite Naht (32) in einer Höhe H2 in dem Schritt h derart eingebracht wird, dass vor dem Nähvorgang und Herstellen der zweiten Naht (32) das nach oben weisende Ende (44a) des mit dem Einfassband (24) umschlossenen/eingefassten Profils (44) in z-Richtung nach unten gedrückt wird, so dass die Außenseite (10a) im Bereich der Höhe H2 für den Nähvorgang freiliegend ist.

6. Verfahren zur Herstellung eines Verdeckbezugs (10) nach einem der vorangehenden Ansprüche, **dadurch gekennzeichnet, dass** als Profil (44) ein elastischer Kunststoff z.B. ein EPDM oder ein Moosgummi verwendet wird.

7. Verdeckbezug (10) für ein Faltverdecks, wobei der Verdeckbezug (10) nach einem der vorangehenden Ansprüche 1-6 hergestellt ist.

## Claims

1. Method for producing a cover (10) for a folding top (1) for a convertible vehicle, wherein the cover (10) comprises an outer side (10a) and an inner side (10b) and furthermore has at least one lateral peripheral region (14) with a peripheral edge (16), wherein the lateral peripheral region (14), in the region of the peripheral edge (16), is designed with a projection (V) which is directed towards the outer side (10a) and which forms a channel (42) that extends in the longitudinal direction, comprising the steps of:
a. providing a cover (10) which has an outer side (10a) and an inner side (10b) and has a peripheral region (14) and a peripheral edge (16),
b. providing a surround band (24) which is of strip-shaped form and comprises a first and a second end region (24a, 24b),
c. providing a rubber-elastic or flexible strip-shaped profile (44),
d. bringing the surround band (24) into abutment against the peripheral edge (16) of the cover (10) by means of its first end region (24a), wherein the surround band (24) abuts directly against the outer side (10a) so as to extend upwards in the z-direction and the second end region (24b) is oriented so as to be directed upwards,
e. securing the surround band (24) to the cover (10) at a height H1 from the peripheral edge (16) by means of a first seam (30),
f. fixing the profile (44) to the surround band (24), wherein the profile (44) extends from the peripheral edge (16) upwards in the z-direction and has a height H0 from the peripheral edge (16), wherein the height H0 is such that the profile (44) covers the first seam (30) at the height H1,
g. folding the surround band (24) in such a way that the surround band (24) is folded once outwards around an end (44a) of the profile (44) that is directed upwards in the z-direction, is guided downwards in the z-direction on an outer side and, further on, encloses the region of the peripheral edge (16) and is guided upwards in the z-direction on the inner side (10b) of the cover (10),
h. securing the surround band (24) to the cover (10) at a height H2 in the region of its second end region (24b) by means of a second seam (32), wherein the second seam (32) is introduced in such a way that exclusively the cover (10) and the second end region (24b) of the surround band (24) are subjected to sewing during the sewing process and the second seam (32) is arranged so as to be concealed by the surrounded profile (44).

2. Method for producing a cover (10) according to Claim 1, **characterized in that** the fixing of the profile (44) in step f is realized by means of adhesive tape which is applied to the profile (44) or to the first strip-shaped region of the surround band (24).

3. Method for producing a cover (10) according to Claim 1, **characterized in that** the fixing of the profile (44) in step f is realized by direct adhesive bonding, wherein an adhesive is applied to the profile (44) or to the strip-shaped region of the surround band (24).

4. Method for producing a cover (10) according to one of the preceding claims, **characterized in that** the folding of the surround band (24) in step g is realized in a bending device.

5. Method for producing a cover (10) according to one of the preceding claims, **characterized in that** the second seam (32) is introduced at a height H2 in step h in such a way that, prior to the sewing process and production of the second seam (32), the upwardly directed end (44a) of the profile (44) enclosed/surrounded by the surround band (24) is pushed downwards in the z-direction such that the outer side (10a) is free in the region of the height H2 for the sewing process.

6. Method for producing a cover (10) according to one of the preceding claims, **characterized in that** an elastic plastic, for example an EPDM or a cellular rubber, is used as the profile (44).

7. Cover (10) for a folding top, wherein the cover (10) is produced according to one of preceding claims 1-6.

## Revendications

1. Procédé de fabrication d'un couvre-capote (10) d'une capote rabattable (1) destiné à un véhicule cabriolet, le couvre-capote (10) comprenant un côté extérieur (10a) et un côté intérieur (10b) et comportant en outre au moins une zone de bord latérale (14) pourvue d'un bord (16), la zone de bord latérale (14) étant réalisée au niveau du bord (16) avec une saillie (V) qui est dirigée vers le côté extérieur (10a), et qui forme une rainure (42) s'étendant dans la direction longitudinale,
ledit procédé comprenant les étapes suivantes :
a. fournir un couvre-capote (10) comprenant un côté extérieur (10a) et un côté intérieur (10b) ainsi qu'une zone de bord (14) et un bord (16),
b. fournir une bande de bordure (24) qui est réalisée sous la forme d'un ruban et qui comprend une première et une deuxième zone d'extrémité (24a, 24b),
c. fournir un profilé en forme de ruban (44) flexible ou en gomme élastique,
d. appliquer la bande de bordure (24) au moyen de sa première zone d'extrémité (24a) sur le bord (16) du couvre-capote (10), la bande de bordure (24) venant en appui directement sur le côté extérieur (10a) en s'étendant vers le haut dans la direction z et la deuxième zone d'extrémité (24b) étant orientée vers le haut,
e. fixer la bande de bordure (24) au moyen d'une première couture (30) sur le couvre-capote (10) à une hauteur H1 à partir du bord (16),
f. fixer le profilé (44) sur la bande de bordure (24), le profilé (44) s'étendant vers le haut dans la direction z à partir du bord (16) et ayant une hauteur H0 à partir du bord (16), la hauteur H0 étant dimensionnée de telle sorte que le profilé (44) recouvre la première couture (30) à la hauteur H 1,
g. replier la bande de bordure (24) de telle sorte que la bande de bordure (24) soit simplement repliée vers l'extérieur autour d'une extrémité (44a) du profilé (44) qui est dirigée vers le haut dans la direction z, soit guidée vers le bas vers le côté extérieur dans la direction z et entoure ensuite la zone du bord (16) et soit guidée vers le haut dans la direction z du côté intérieur (10b) du couvre-capote (10),
h. fixer la bande de bordure (24) au niveau de sa deuxième zone d'extrémité (24b) au moyen d'une deuxième couture (32) à une hauteur H2 sur le couvre-capote (10),
la deuxième couture (32) étant introduite de telle manière que seuls le couvre-capote (10) et la deuxième zone d'extrémité (24b) de la bande de bordure (24) soient cousus pendant le processus de couture et la deuxième couture (32) étant disposée de manière à être cachée au moyen du profil bordé (44).

2. Procédé de fabrication d'un couvre-capote (10) selon la revendication 1, **caractérisé en ce que** le profilé (44) est fixé à l'étape f au moyen d'un ruban adhésif qui est appliqué sur le profilé (44) ou la première zone en forme de ruban de la bande de bordure (24).

3. Procédé de fabrication d'un couvre-capote (10) selon la revendication 1, **caractérisé en ce que** le profilé (44) est fixé à l'étape f par collage direct, un adhésif étant appliqué sur le profilé (44) ou la zone en forme de ruban de la bande de bordure (24).

4. Procédé de fabrication d'un couvre-capote (10) selon l'une des revendications précédentes, **caractérisé en ce que** le repliement de la bande de bordure (24) à l'étape g est effectué dans un dispositif de pliage.

5. Procédé de fabrication d'un couvre-capote (10) selon l'une des revendications précédentes, **caractérisé en ce que** la deuxième couture (32) est introduite à une hauteur H2 à l'étape h de telle sorte qu'avant le processus de couture et la réalisation de la deuxième couture (32), l'extrémité (44a), dirigée vers le haut, du profilé (44) entouré/bordé par la bande de bordure (24) est pressée vers le bas dans la direction z de sorte que le côté extérieur (10a) soit dégagé dans la zone de la hauteur H2 pour le processus de couture.

6. Procédé de fabrication d'un couvre-capote (10) selon l'une des revendications précédentes, **caractérisé en ce qu'**une matière synthétique élastique, par exemple un EPDM ou un caoutchouc mousse, est utilisée comme profilé (44).

7. Couvre-capote (10) destiné à une capote rabattable, le couvre-capote (10) étant fabriqué selon l'une des revendications précédentes 1 à 6.
